# EUROPEAN PATENT APPLICATION

(11) **EP 0 683 416 A1**
(43) Date of publication of application: **22.11.1995**
(21) Application number: 95105754.6
(22) Date of filing: 18.04.1995
(51) Int. Cl.: G02C 7/04

(54) **Corneal contact lens for controlled keratoreformation**

(30) Priority: 20.05.1994 US 247031
(71) Applicant: Blackburn, Alvis E., Dallas, Texas 75229 (US)
(72) Inventor: Blackburn, Alvis E., Dallas, Texas 75229 (US)
(74) Representative: Frankland, Nigel Howard

(57) **Abstract**

A present corneal contact lens (10) for controlled keratoreformation (CKR) is an aspheric lens which is customized in shape for each particular patient. The lens has both a concave surface (12) and a convex surface (14). A circular zone on the concave surface between the center of the lens (72) and a first radial distance (74) presents a radius of curvature (84) which reshapes the cornea to correct the patient's vision. The radius of curvature can be changed as appropriate from the center of the lens to its outer periphery, but there are no discontinuities in the rate of change in the radius of curvature.

## Description

### TECHNICAL FIELD OF THE INVENTION

The present invention relates to a corneal contact lens used for controlled keratoreformation (CKR). Specifically, the contact lens is used to reform or reshape a patient's cornea to treat vision problems such as nearsightedness (myopia). The present invention also relates to a method of treating vision problems with such a lens.

### BACKGROUND OF THE INVENTION

Nearsightedness, or myopia, is a common affliction. The myopic eye tends to be large with a deep anterior chamber. Parallel rays of light striking the myopic eye are focused in the vitreous anterior to the retina, resulting in the perception of a blurred image. The refractive error of myopic eyes is produced by variations in the axial length of the eye and the curvature of the cornea. A concave or minus lens moves the point of focus back to the retina. Alternatively, the patient's cornea can be flattened to move the point of focus onto the retina. Corrective glasses or contact lenses only compensate for the myopia, and do not attempt to correct the shape of the cornea.

Radial Keratotomy (RK) is a surgical procedure intended to change the overall refractive state of the eye, specifically to reduce myopia. In this procedure, radial incisions are actually made in the center of the cornea. The healing of these incisions tends to flatten the cornea, thereby reducing or eliminating the myopia. The number, depth and placement of these incisions determine the amount of flattening. RK is becoming a popular and lucrative procedure for ophthalmologist; however, it can have serious side effects. Improper healing or scarring can permanently ruin the person's eyesight. RK is also an expensive procedure.

Controlled Keratoreformation (CKR) is an alternative, noninvasive procedure which attempts to reform the shape of the cornea without surgery. The process involves the creation of a corneal topographical map, which maps the radius of curvature at various points on the eye. A special contact lens is then designed so that it is flatter in radii than the central corneal curvature while matching the curvature at the corneal periphery. The flatter central curvature of the lens causes the cornea's central curvature to flatten.

U.S. Patent Nos. 4,952,045 and 5,191,365 to Stoyan disclose contact lenses designed for CKR. Stoyan '045 details a corncal contact lens with three distinct zones: a central zone, a tear zone, and a peripheral zone. Each zone also has a distinct and constant radius of curvature. The tear zone acts to create a reservoir of tear fluid which allegedly helps position the lens centrally on the cornea. Despite the claims made in the patent, experience and analysis of patients who wear the Stoyan lens leads to the conclusion that the lens rides "high" on the eye. In other words, the tear zone might actually position the lens to a non-central position. Such misalignment will cause a flattening of the wrong part of the cornea, worsening the patient's eyesight. Moreover, with each blink, the eyelid lightly presses the lens against the cornea. The pressure can cause the ridge formed between each zone to irritate the cornea. Stoyan '365 discloses a virtually identical lens to Stoyan '045 except the periphery zone is divided in several distinct zones, evidently to decrease the level of discomfort felt by patients.

A need exists for a corncal contact lens for CKR which does not drift on the cornea, which reshapes the portion of the cornea which needs to be reshaped. Such a corneal contact lens must also avoid any sharp transition in the radius of curvature between any two points on the concave side of the lens. Such a lens must also provide a less expensive method of treating myopia than radial keratotomy while also eliminating any risk of permanent damage.

### SUMMARY OF THE INVENTION

The present invention relates to an improved corneal contact lens for use in corneal keratoreformation (CKR). Each lens is custom milled to meet the needs of the individual patient, but any lens designed in accordance with the present invention have several common features. First, each lens has a gradual transition in the radius of curvature from the center of the lens to its peripheral edge. Unlike the Stoyan lens mentioned above, the present lens design does not have any discontinuities from one zone to another. In fact, the present lens does not have distinct zones at all.

By eliminating distinct zones, the applicant has also eliminated any edges on the concave surface of the lens. This diminishes the risk of irritating the cornea. Eliminating distinct zones also allows the lens to be properly fitted to more points on the cornea. The better fit will diminish the likelihood drift. In other words, the lens is less likely to ride off of cornea. Patients treated with the applicant's lens have shown rapid and remarkable improvement in their vision. Treatment with the lens involves making a corneal topographical map of the patient's cornea. This maps the radius of curvature for a number of points on the cornea. A lens is then designed to increase, or flatten, the radius of curvature of the center of the cornea. The peripheral portions of the lens can then be matched to the radius of curvature of the periphery of the cornea. A slight increase in radius of curvature is made at the very edge of the lens to allow tear flow under the periphery of the lens. The patient should wear the lens for a sufficient period of time in which to achieve satisfactory results. After treatment, the patient can wear a retainer lens for a few hours a day to maintain the shape of the reshaped cornea.

### BRIEF DESCRIPTION OF THE DRAWINGS

For a more complete understanding of the present invention, and for further details and advantages thereof, reference is now made to the following Detailed Description taken in conjunction with the accompanying drawings, in which:
FIGURE 1 is top plan view if an aspheric corneal contact lens for CKR in accordance with the present invention;
FIGURE 2 is a sectional view through lines 2-2 of the corneal contact lens in Fig. 1;
FIGURE 3 is a graphical representation of the variations in radius of curvature found in a prior art CKR lens;
FIGURE 4 is a graphical representation of one possible variation in radius of curvature for the present CKR lens;
FIGURE 5 is a corneal topographical map of a patient treated by surgical radial keratotomy;
FIGURE 6 is a corneal topographical map of a patient treated using a lens in accordance with the Stoyan '045 reference discussed above;
FIGURES 7A and 7B are pre-treatment and post-treatment corneal topographies of a first patient treated using the present invention; and
FIGURES 8A and 8B are pre-treatment and post-treatment corneal topographies of a second patient treated using the present invention.

### DETAILED DESCRIPTION OF THE DRAWINGS

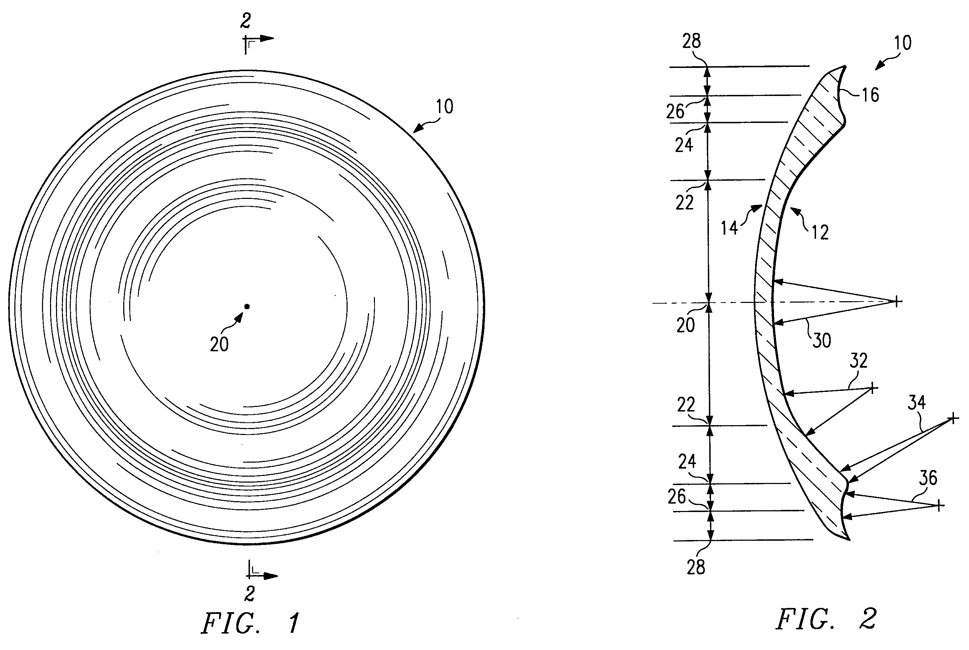

The present invention relates to a contact lens for use in corneal keratoreformation. The lens 10, shown in Figures 1 and 2, embodies the present invention and overcomes many of the disadvantages found in the prior art. The lens 10 has a concave surface 12 and a convex surface 14. The concave surface 12 is placed toward the cornea. A tear layer separates the lens 10 from the cornea (not shown). A sphere has a constant radius of curvature. However, the surface of the eye is more complex than a sphere. As discussed, the cornea of a myopic eye focuses the light in front of the retina. In essence, the radius of curvature for the cornea is too short. Therefore, to fit a lens 10 to correct a myopic eye, the radius of curvature of the concave surface 12 is dimensioned to be longer than that portion of the cornea. The longer radius of curvature (R_{c}) of the concave surface 12 will tend to flatten the cornea, thereby diminishing the myopia.

The radius of curvature for any particular point on the eye is determined by producing a corneal topographical map. The radius is not measured from a single imaginary point. Rather, the R_{c} of a first point is the value required to create a smooth curve between two points immediately adjacent to the first point. Therefore, a flatter concave lens surface will have a longer R_{c}, while a myopic cornea will have a shorter R_{c}. The R_{c} of center point 20 is determined by arc lines 40. Likewise, the R_{c} of the lens at radial distance 22 is determined by 42, at radial distance 24 by arch lines 34, and at radial distance 26 by arc lines 36. Note, the arc lines are not necessarily drawn to scale.

The thickness of the lens produces refractive correction for the eye during the course of treatment. Ideally, the thickness at the center of the lens is minimized. The peripheral surface 16 of the lens 10 is slightly upturned. With each blink, tears are pumped under this peripheral edge to flush away toxins and debris which have accumulated in the tear fluid under the lens. The lens is also typically made of a rigid gas permeable (RGP) plastic material. A plug of the material can be mounted in a computer controlled lathe such as one made by DAC Corp. of El Carpinteria, California.

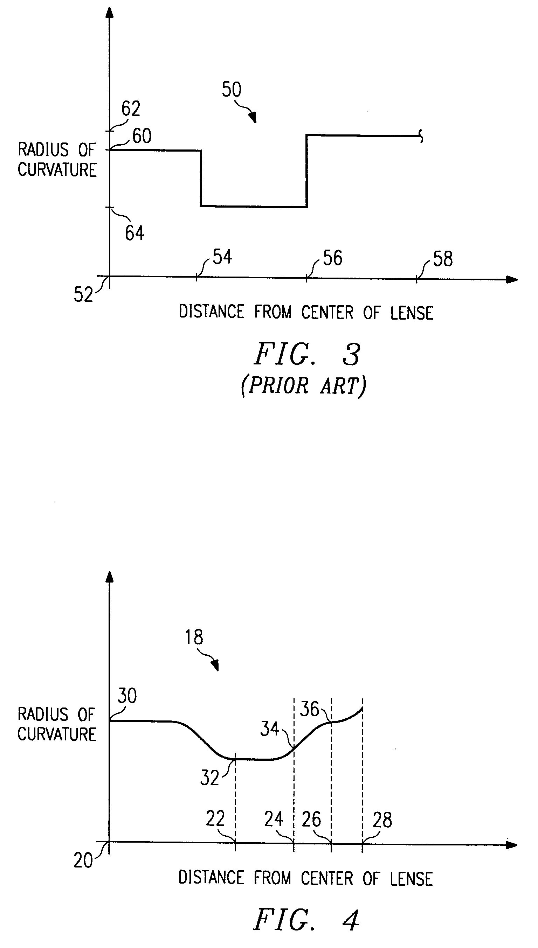

FIGURES 3 and 4 graphically illustrate the difference between a "spheric" lens, such as disclosed in Stoyan '045 and the present invention. As discussed, the Stoyan '045 lens has sharp transitions in the radius of curvature from the center of the lens to its periphery. FIGURE 3 provides a profile 50 of the Stoyan '045 lens, where the X-axis represents the distance from the center of the lens, and the y-axis represents the radius of curvature for the that point on the lens. Point 52 represents the center of the cornea. A central zone is defined as the circular area between the center 52 and a discrete radial distance 54 outward from the center. The R_{c} for the central zone is constant at value 60. A discrete, annular tear zone is defined between radial distance 54 and radial distance 56. The R_{c} of the tear zone is shorter than the R_{c} of the central zone. A discrete peripheral zone extends from the limit of the tear zone 56 to the peripheral edge 58 of the lens. The R_{c} of the peripheral zone 62 is equal to or longer than R_{c} of the central zone. It is important to recognize that the sharp transitions in R_{c} produce ridges on the concave surface of the lens, each ridge having a distinct edge.

FIGURE 4 provides a graphical profile 18 of the lens in Fig. 2 and illustrates the gradual change in R_{c} from the center of the lens to its peripheral edge. The lens 10 may still have portions where the R_{c} is constant, but when a change is required, the transition is gradual. For example, between the center of the lens 20 and radial distance 22, the lens demonstrates a R_{c} between values 30 and 32. Between the radial distance 22 and radial distance 24, the R_{c} tapers down to a value 34. Likewise, the value of R_{c} can lengthen again as it does between radial distance 26 and radial distance 28. Never does the change take place suddenly, thereby avoiding an edge on the concave lens surface which could irritate the cornea. The lens reduces near-sightedness by flattening the central cornea while steepening the peripheral cornea. This is achieved in stages by making the central zone of the lens flatter than the central cornea and making the steepest portion of the reverse asphere steeper than the peripheral cornea. When the central zone loses its central bearing characteristics, a new lens is made with a flatter central zone and an even steeper reverse aspheric peripheral curve. This procedure is repeated until the desired reduction in near-sightedness is achieved.

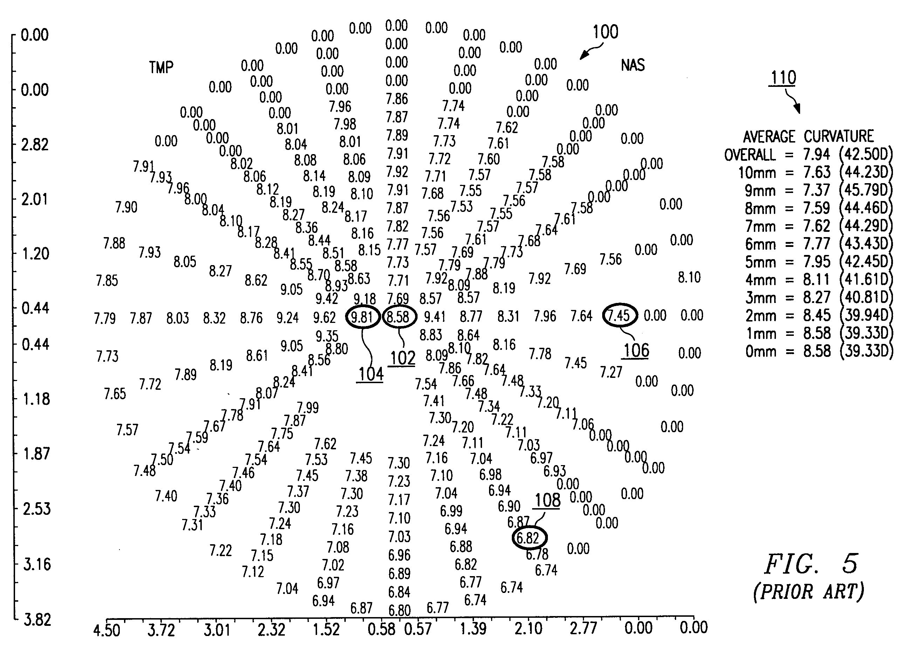

FIGURE 5 is a corneal topographical map 100 of a patient treated with radial keratotomy. Each value on the topographical map is the R_{c} for that point on the cornea. Note the disturbing shifts in the radius of curvature across the span of the eye. A normal cornea should demonstrate no more than a 0.2 millimeter (mm) change in R_{c} across its breadth. While this topographical map is admittedly a "nightmare" case, it demonstrates the incredible risk of cutting the cornea in an attempt to reshape it. Note that the center R_{c} 102 is a value of 8.58 mm. Immediately adjacent to this is a R_{c} 104 of 9.81 mm, a change of 1.23 mm. Peripheral values are exemplified by R_{c} 106 of 7.45 mm and R_{c} 108 of 6.82 mm. This flattened periphery causes a significant diminishment in the quality of that patient's vision. Again, these are the results of a procedure intended to improve the patient's vision. Table 110 provides the average R_{c} for the cornea, as well as the average R_{c} at spaced radial distances. Any values of 0.00 mm represent areas where the tester did not have an unobstructed view of the cornea (i.e. the patient's eyelid interfered).

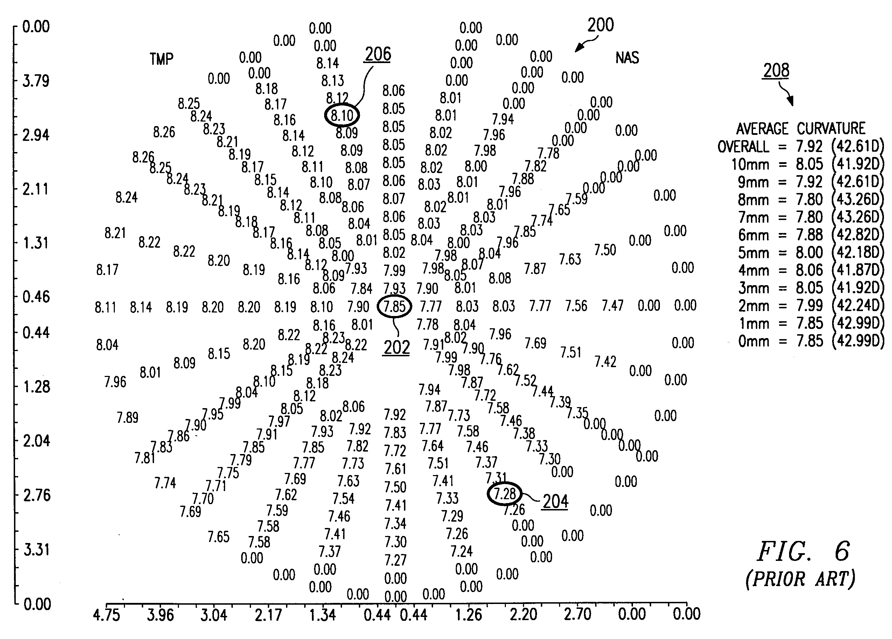

FIGURE 6 is the result of treatment with a lens disclosed by Stoyan '045. Note the R_{c} for the corneal center is 7.85 mm, while the R_{c} in the lower right portion of the cornea is exemplified by value 204 of 7.28 mm. Clearly the lens rode up on the cornea to produce a R_{c} in the upper left quadrant exemplified by value 206 of 8.10 mm. The longer R_{c} values in the upper left quadrant translates into a flatter cornea, while the shorter R_{c} of the lower right quadrant manifests a bulge. Again, table 208 provides average values for the cornea and at equally spaced radial intervals. The eyesight of this patient is not corrected.

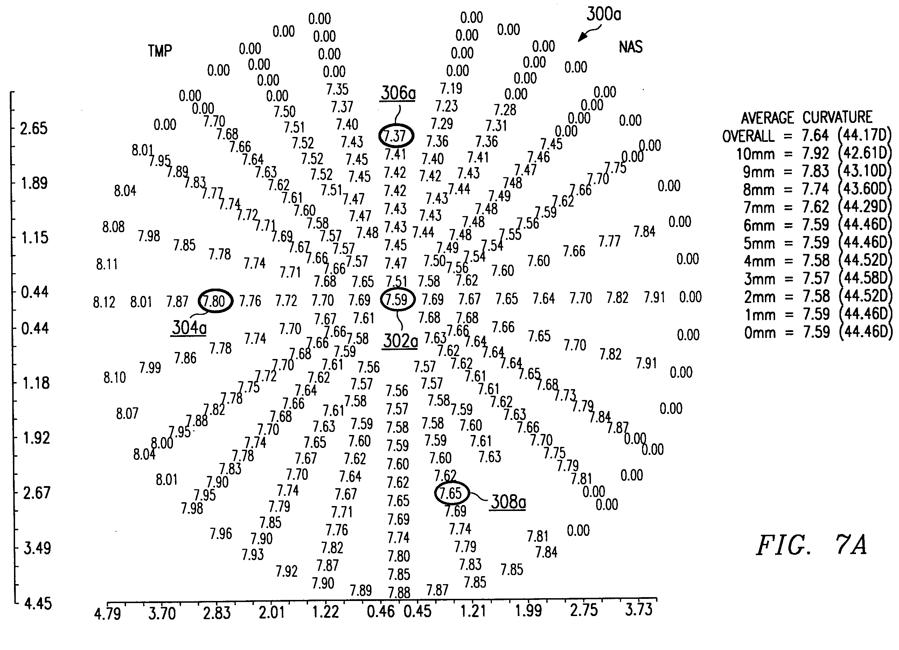

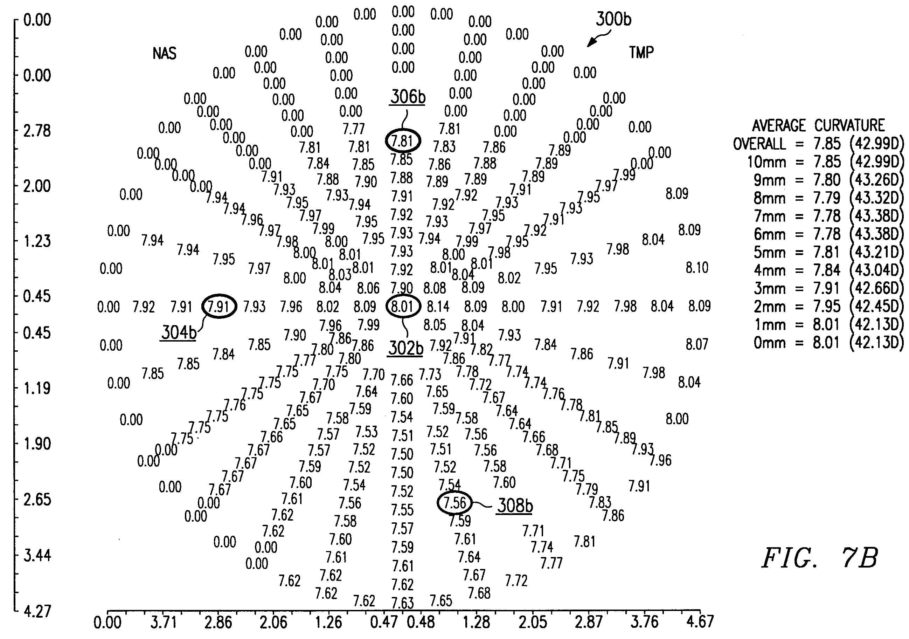

FIGURES 7a and 7b illustrate a before 300a and after 300b comparison for a first patient treated with a lens using applicant's inventive design. The patient initially demonstrated 20/400 vision. The center of the cornea 302a had a R_{c} value of 7.59 mm. Peripheral values averaged near 7.90 mm. Above the center of the cornea, at point 306a, the cornea had a R_{c} value of 7.37 mm. To the left of center, at point 304a, the patient had a R_{c} of 7.80 mm. In the lower right quadrant, the R_{c} is exemplified by point 308a with a value of 7.65 mm. The maximum variance ranged between 7.19 mm and 8.12 mm. After two months of treatment using applicant's aspheric lens, the patient's vision was restored to 20/30. A corneal topographical map taken after the treatment period reveals a flatter center point 302b having a R_{c} of 8.01 mm. The R_{c} of point 304b improved to 7.91 mm, while the R_{c} of point 306b improved to 7.37 mm. The R_{c} of point 308b decreased slightly. Overall, the shape of the cornea is already greatly improved, with the maximum variance ranging between 7.51 mm and 8.04 mm.

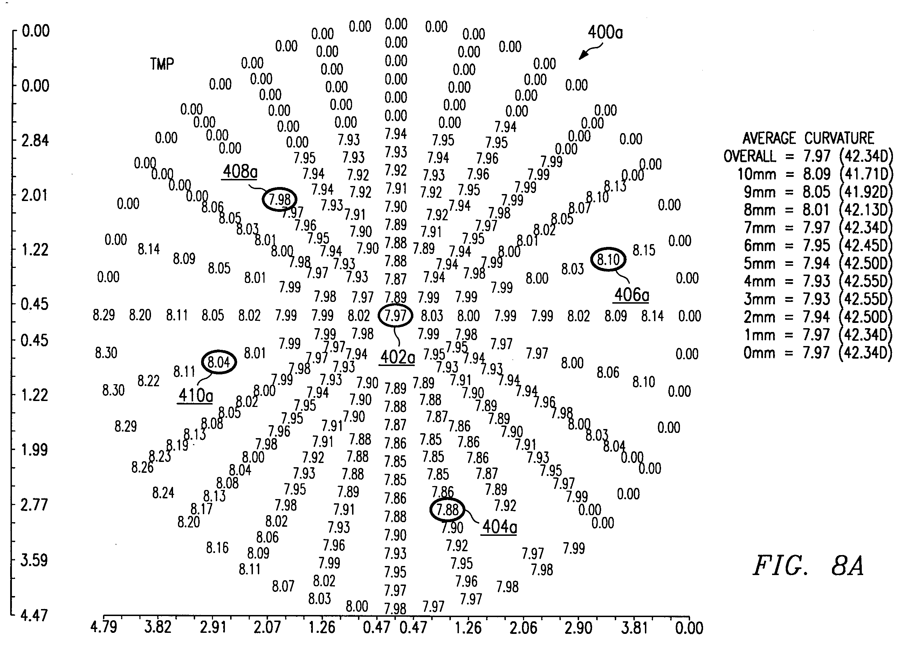

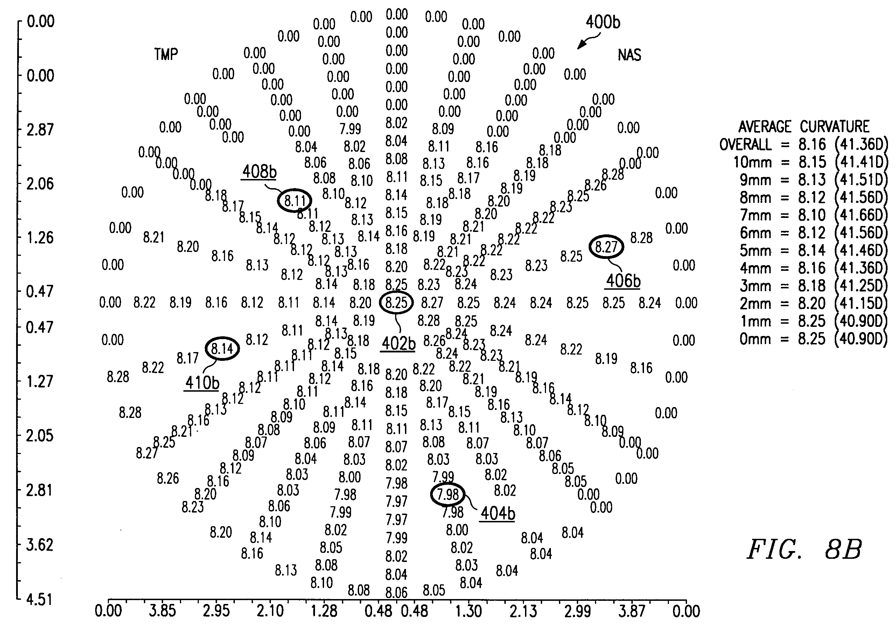

FIGURES 8a and 8b illustrate another before 400a and after 400b comparison for a second patient treated with a lens using applicant's inventive design. The patient initially demonstrated 20/200 vision. The center of the cornea 402a had a R_{c} value of 7.97 mm. Peripheral values averaged near 7.95 mm. In the lower right quadrant, an exemplary R_{c} is found at point 404a with a length of 7.88 mm. In the upper right quadrant, an exemplary R_{c} is found at point 406a with a length of 8.10 mm. Likewise, the upper and lower left quadrant's have exemplary points at 408a and 410a respectively having values of 7.98 mm and 8.04 mm. This patient did not show any pronounced region of irregularity, only a cornea with an overall shortness in radius of curvature. After less than a month of treatment, the patient's vision was improved to 20/15. A review of the corneal topographical map taken after treatment reveals a slightly flatter cornea, with a R_{c} at the center point 402b of 8.25 mm. Points 404b and 406b showed improvements to 7.98 mm and 8.27 mm respectively. Also, points 408b and 410b showed improvements to 8.11 mm and 8.14 mm respectively. In sum, this patient showed a marked improvement in less than a month.

Any patient fitted with a pair of the applicant's corneal contact lenses should wear the lens on a continual basis during the treatment phase. After the cornea is reshaped and the patient's vision corrected, the patient should wear a "retainer" lens for several hours a day to maintain the reformed shape.

Although preferred embodiments of the invention have been described in the foregoing Detailed Description and illustrated in the accompanying drawings, it will be understood that the invention is not limited to the embodiments disclosed, but is capable of numerous rearrangements, modifications, and substitutions of parts and elements without departing from the spirit of the invention. Accordingly, the present invention is intended to encompass such rearrangements, modifications, and substitutions of parts and elements as fall within the scope of the invention.

## Claims

1. A corneal contact lens for use in treating a myopic eye with a cornea having a central radius of curvature, said lens having a concave surface and a convex surface, said concave surface comprising:
(a) a center having a first radius of curvature;
(b) a periphery having a second radius of curvature, wherein the radius of curvature of the concave surface gradually varies between the center and the periphery.

2. The corneal contact lens of Claim 1 wherein said lens is made of a rigid gas permeable material.

3. The corneal contact lens of Claim 1 wherein a thickness between the concave and convex surfaces varies from the center to the periphery of the lens.

4. The corneal contact lens of Claim 1 wherein the thickness between the center of the concave surface and convex surface is minimized.

5. The corneal contact lens of Claim 1 wherein the radius of curvature of the center of the concave surface is longer than the radius of curvature of the cornea.

6. The corneal contact lens of Claim 1 wherein the radius of curvature of the periphery of the concave surface is lengthened gradually.

7. Use of a cornea contact lens in a method of treating a myopic eye having a cornea with a given shape, wherein the method comprises the step of wearing a lens on the cornea of said eye, said lens having a concave surface adapted to contact the eye to re-shape the cornea, the lens being such that the radius of curvature of the re-shaped cornea varies on gradually.
